(19) Europäisches Patentamt
European Patent Office
Office européen des brevets

(11) EP 4 318 634 A1

(12) **EUROPEAN PATENT APPLICATION**
published in accordance with Art. 153(4) EPC

(43) Date of publication:
**07.02.2024 Bulletin 2024/06**

(21) Application number: **22780627.0**

(22) Date of filing: **25.03.2022**

(51) International Patent Classification (IPC):
***H01M 4/13*** *(2010.01)* ***H01M 4/62*** *(2006.01)*

(52) Cooperative Patent Classification (CPC):
**H01M 4/13; H01M 4/62;** Y02E 60/10

(86) International application number:
**PCT/JP2022/014628**

(87) International publication number:
**WO 2022/210414 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057726**

(71) Applicant: **SEKISUI CHEMICAL CO., LTD.**
**530-0047 (JP)**

(72) Inventors:
- **MAEDA, Takayuki**
  **Koka-shi, Shiga 528-8585 (JP)**
- **ASABA, Yutaro**
  **Koka-shi, Shiga 528-8585 (JP)**

(74) Representative: **Cabinet Beau de Loménie**
**158, rue de l'Université**
**75340 Paris Cedex 07 (FR)**

# (54) ALL SOLID STATE BATTERY COMPOSITION

(57) The present invention provides an all-solid-state battery composition that is excellent in dispersibility of an active material or an electrolyte and adhesion, can provide a high-strength coating film or molded body, and enables the production of a high-capacity all-solid-state battery with low electrode resistance, and also provides an all-solid-state battery including the all-solid-state battery composition. The present invention relates to an all-solid-state battery composition to be used for an all-solid-state battery, the composition containing: an active material and/or a solid electrolyte; a polyvinyl acetal resin; and an organic solvent, the polyvinyl acetal resin having an average degree of polymerization of 5,000 or greater and 10,000 or less.

EP 4 318 634 A1

## Description

TECHNICAL FIELD

The present invention relates to an all-solid-state battery composition and an all-solid-state battery including the all-solid-state battery composition.

BACKGROUND ART

With the recent spread of mobile electronic devices such as mobile video cameras and mobile PCs, the demand for secondary batteries as a portable power source is rapidly increasing. There is also a great need for smaller, lighter secondary batteries with higher energy density.

Secondary batteries, which can be repeatedly charged and discharged, have been mainly aqueous batteries such as lead batteries and nickel-cadmium batteries. These aqueous batteries, although having excellent charge/discharge characteristics, are unsatisfactory as a portable power source for a mobile electronic device in terms of properties such as battery weight and energy density.

Thus, intensive research and development have been made on lithium secondary batteries including a negative electrode made of lithium or a lithium alloy. These lithium secondary batteries have excellent properties such as high energy density, less self-discharge, and light weight.

A typical electrode of a lithium secondary battery is prepared as follows. An active material and a binder are kneaded with a solvent, and the active material is dispersed to form a slurry. The slurry is applied to a current collector by the doctor blade method or the like, and dried to form a thin film as an electrode.

The currently most common binders, especially for electrodes of lithium secondary batteries, are fluororesins typified by polyvinylidene fluoride (PVDF). Attempts have also been made to use binders other than PVDF.

For example, Patent Literature 1 discloses a method of using a binder for a non-aqueous secondary battery. The binder contains a copolymer of monomers including a monomer containing an acidic functional group and a monomer containing an amide group.

Patent Literature 2 discloses a binder composition for a secondary battery positive electrode. The composition contains predetermined amounts of an aromatic vinyl unit, a nitrile group unit, a hydrophilic group unit, and a linear alkylene unit.

Patent Literature 3 discloses a method of producing a laminate of a solid electrolyte sheet containing a solid electrolyte and a binder and an electrode active material sheet containing an electrode active material, wherein the binder is a polyvinyl butyral resin.

CITATION LIST

- Patent Literature

Patent Literature 1: JP 5708872 B
Patent Literature 2: JP 2013-179040 A
Patent Literature 3: JP 2012-238545 A

SUMMARY OF INVENTION

- Technical problem

However, even with the binders disclosed in Patent Literatures 1 to 3, the solid electrolyte or the active material may have low dispersibility and easily cause uneven application or surface irregularities during application.

Moreover, the resulting strength after application (molding) may be low, and the adhesion to adherends may be problematic.

Furthermore, the all-solid-state battery to be produced may have insufficient battery performance.

The present invention aims to provide an all-solid-state battery composition that is excellent in dispersibility of an active material or an electrolyte and adhesion, can provide a high-strength coating film or molded body, and enables the production of a high-capacity all-solid-state battery with low electrode resistance, and also aims to provide an all-solid-state battery including the all-solid-state battery composition.

- Solution to problem

The present invention relates to an all-solid-state battery composition to be used for an all-solid-state battery, the composition containing: an active material and/or a solid electrolyte; a polyvinyl acetal resin; and an organic solvent, the polyvinyl acetal resin having an average degree of polymerization of 5,000 or greater and 10,000 or less.

The present invention is described in detail below.

After extensive studies, the present inventors have found out that using a polyvinyl acetal resin having a predetermined structure as a binder for forming an all-solid-state battery results in a composition that is excellent in dispersibility of an active material or an electrolyte and adhesion, can provide a high-strength coating film or molded body, and enables the production of a high-capacity all-solid-state battery with low electrode resistance. The inventors thus completed the present invention.

The all-solid-state battery composition of the present invention contains an active material and/or a solid electrolyte.

The all-solid-state battery composition of the present invention may be used for an electrode or an electrolyte layer.

When used for an electrode, the composition may be used for both a positive electrode and a negative electrode. Accordingly, examples of the active material include positive electrode active materials and negative electrode active materials.

Examples of the positive electrode active materials include lithium-containing complex metal oxides such as lithium nickel oxide, lithium cobalt oxide, and lithium manganese oxide. Specific examples include $LiNiO_2$, $LiCoO_2$, and $LiMn_2O_4$.

Each of these may be used alone, or two or more of them may be used in combination.

Examples of the negative electrode active material include materials conventionally used as negative active electrode materials for secondary batteries. Examples thereof include spherical natural graphite, natural graphite, artificial graphite, amorphous carbon, carbon black, and materials obtained by adding different elements to these components.

The all-solid-state battery composition of the present invention preferably contains a conductivity-imparting agent (conductive aid).

Examples of the conductivity-imparting agent include carbon materials such as graphite, acetylene black, carbon black, Ketjen black, and vapor-grown carbon fiber. In particular, the conductivity-imparting agent used for a positive electrode is preferably acetylene black or carbon black, while the conductivity-imparting agent used for a negative electrode is preferably acetylene black or scaly graphite.

The solid electrolyte is not limited, and may be the same as the active material.

Specific examples include low-melting-point glass such as $LiO_2{\cdot}Al_2O_3{\cdot}SiO_2$ inorganic glass, lithium sulfur glass such as $Li_2S$-$M_xS_y$ (M = B, Si, Gc, or P), lithium cobalt complex oxides such as $LiCoO_2$, and lithium manganese complex oxides such as $LiMnO_4$. Examples also include lithium nickel complex oxides, lithium vanadium complex oxides, lithium zirconium complex oxides, lithium hafnium complex oxides, lithium silicate phosphate ($Li_{3.5}Si_{0.5}P_{0.5}O_4$), titanium lithium phosphate ($LiTi_2(PO_4)_3$), and lithium titanate ($Li_4Ti_5O_{12}$). Examples also include lithium oxide compounds such as germanium lithium phosphate ($LiGe_2(PO_4)_3$), $Li_2O$-$SiO_2$, $Li_2O$-$V_2O_5$-$SiO_2$, $Li_2O$-$P_2O_5$-$B_2O_3$, $Li_2O$-$GeO_2Ba$, and $Li_{10}GeP_2S_{12}$. The solid electrolyte preferably has an average particle size of 0.05 to 50 um.

The all-solid-state battery composition of the present invention contains a polyvinyl acetal resin. In the present invention, the use of a polyvinyl acetal resin as a binder (binding agent) causes an attractive interaction between a hydroxy group of the polyvinyl acetal resin and an oxygen atom of the active material, leading to a structure in which the polyvinyl acetal resin surrounds the active material. In addition, another hydroxyl group in the same molecule has an attractive interaction with the conductivity-imparting agent to keep the distance between the active material and the conductivity-imparting agent within a predetermined range. Such a characteristic structure in which the distance between the active material and the conductivity-imparting agent is kept within a specific range remarkably improves the dispersibility of the active material. The same effect can be obtained also when the polyvinyl acetal resin is used in the electrolyte layer. As compared with the use of a resin such as PVDF, the use of the polyvinyl acetal resin can improve the adhesion to current collectors. Moreover, the polyvinyl acetal resin has excellent solvent solubility, which advantageously widens the choice of solvents.

The lower limit of the average degree of polymerization of the polyvinyl acetal resin is 5,000, and the upper limit thereof is 10,000. When the average degree of polymerization is 5,000 or greater, the resulting electrode sheet has high strength and reduced electrode resistance. The reduced electrode resistance allows production of a high-capacity all-solid-state battery. When the average degree of polymerization is 10,000 or less, good dispersibility is achieved in the resulting all-solid-state battery composition. The lower limit of the average degree of polymerization is preferably 5,100, more preferably 5,300, still more preferably 5,600, particularly preferably 6,000, further particularly preferably 7,000. The upper limit of the average degree of polymerization is preferably 9,500, more preferably 9,000.

The average degree of polymerization is the same as the average degree of polymerization of a raw material

polyvinyl alcohol resin. The average degree of polymerization of a raw material polyvinyl alcohol resin can be measured by a method in conformity with JIS K 6726, for example.

The polyvinyl acetal resin includes an acetal group-containing structural unit represented by the following formula (1).

[Chem. 1]

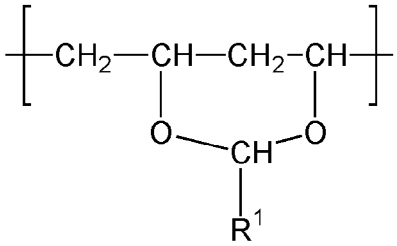

(1)

In the formula (1), $R^1$ represents a hydrogen atom or an alkyl group having a carbon number of 1 or greater. Each $R^1$ may be the same or different.

The amount of the acetal group-containing structural unit (degree of acetalization) in the polyvinyl acetal resin is preferably 55.0 mol% or greater and 84.0 mol% or less. When the degree of acetalization is 55.0 mol% or greater, the solubility in solvents can be improved, allowing the polyvinyl acetal resin to be suitably used in the form of a composition. When the degree of acetalization is 84.0 mol% or less, the solubility in solvents can be improved. The lower limit is more preferably 70 mol%, still more preferably 75 mol%.

The degree of acetalization herein refers to the proportion of the number of hydroxy groups acetalized with butyraldehyde in the number of hydroxy groups in the polyvinyl alcohol. The degree of acetalization is calculated by counting acetalized two hydroxy groups because an acetal group of a polyvinyl acetal resin is formed by acetalization of two hydroxy groups.

Herein, the degree of acetalization means the amount of the acetal group-containing structural unit relative to the entire polyvinyl acetal resin.

The acetal group-containing structural unit can be obtained by acetalization with an aldehyde.

The lower limit of the carbon number of the aldehyde (the number of carbons excluding the aldehyde group) is preferably 1, and the upper limit thereof is preferably 11. With the carbon number within the above range, the resin has lower hydrophobicity to have better purification efficiency, leading to reduction of the Na ion content.

Specific examples of the aldehyde include alkyl aldehydes such as acetaldehyde, butyraldehyde, and propionaldehyde, benzaldehyde, and aldehydes containing a vinyl group (vinyl aldehydes) such as acrolein. Preferred among these are alkyl aldehydes.

The acetal group is preferably at least one selected from the group consisting of a butyral group, a benzacetal group, an acetoacetal group, a propionacetal group, and a vinyl acetal group, particularly preferably at least one selected from the group consisting of a butyral group, an acetoacetal group, a propionacetal group, and a vinyl acetal group.

[Chem. 2]

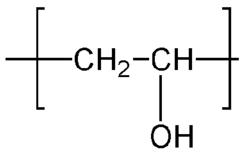

(2)

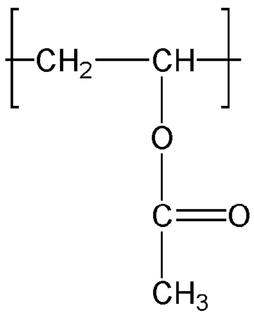

(3)

The polyvinyl acetal resin includes a hydroxy group-containing structural unit represented by the formula (2).

The lower limit of the amount of the hydroxy group-containing structural unit (hydroxy group content) in the polyvinyl acetal resin is preferably 15.0 mol%, and the upper limit thereof is preferably 30.0 mol%. When the hydroxy group content is 15.0 mol% or greater, the adhesion to current collectors can be improved. When the hydroxy group content is 30.0 mol% or less, the resulting composition has much better moisture resistance. The solubility in solvents and the flexibility can be improved.

The lower limit of the hydroxy group content is more preferably 16 mol%, and the upper limit thereof is more preferably 25.0 mol%, still more preferably 22 mol%. The hydroxy group content herein means the amount of the hydroxy group-containing structural unit relative to the entire polyvinyl acetal resin.

In the polyvinyl acetal resin, the lower limit of the number of hydroxy groups per molecule is preferably 1,500, and the upper limit thereof is preferably 3,000. When the number is within the range, the moisture resistance can be improved. The lower limit of the number of hydroxy groups per molecule is more preferably 2,000, and the upper limit thereof is more preferably 2,800.

The number of hydroxy groups per molecule can be calculated based on the number average molecular weight and composition of the polyvinyl acetal resin. The number average molecular weight can be measured by GPC.

The polyvinyl acetal resin preferably includes an acetyl group-containing structural unit represented by the formula (3).

The lower limit of the amount of the acetyl group-containing structural unit (acetyl group content) in the polyvinyl acetal resin is preferably 0.1 mol%, and the upper limit thereof is preferably 22 mol%. When the acetyl group content is 0.1 mol% or greater, the flexibility of the resin is improved, leading to sufficient adhesion to current collectors. When the acetyl group content is 22 mol% or less, appropriate flexibility can be obtained. The lower limit of the acetyl group content is more preferably 1 mol%, still more preferably 2 mol%. The upper limit of the acetyl group content is more preferably 20 mol%, still more preferably 15 mol%, particularly preferably 10 mol%.

The acetyl group content herein means the amount of the acetyl group-containing structural unit relative to the entire polyvinyl acetal resin.

The polyvinyl acetal resin is preferably an unmodified polyvinyl acetal resin. This can improve the solubility in solvents.

The unmodified polyvinyl acetal resin herein means one including only an acetal group-containing structural unit, a hydroxy group-containing structural unit, and an acetyl group-containing structural unit.

The polyvinyl acetal resin may be one modified with a functional group. The modifying functional group is preferably at least one functional group selected from the group consisting of a carboxy group, a sulfonic acid group, a sulfinic acid group, a sulfenic acid group, a phosphoric acid group, a phosphonic acid group, an amino group, and their salts. More preferred among them are a carboxy group, a sulfonic acid group, and their salts. The modifying functional group is particularly preferably a sulfonic acid group or its salt. When the polyvinyl acetal resin contains a modifying functional group, particularly excellent dispersibility of an active material and a conductive aid is achieved in the all-solid-state battery composition. Examples of the salts include sodium salts and potassium salts.

For higher strength of the electrode sheet, the modifying functional group is preferably a functional group other than an alkylene oxide group.

The amount of the polyvinyl acetal resin in the all-solid-state battery composition of the present invention is not limited. The lower limit thereof is preferably 0.2% by weight, and the upper limit thereof is preferably 5% by weight. When

the amount of the polyvinyl acetal resin is 0.2% by weight or greater, the adhesion to current collectors is improved. When the amount of the polyvinyl acetal resin is 5% by weight or less, the discharge capacity of the all-solid-state battery can be improved. The amount of the polyvinyl acetal resin is more preferably 0.5 to 3% by weight.

The polyvinyl acetal resin is obtained by acetalizing a polyvinyl alcohol with an aldehyde.

Specifically, the polyvinyl acetal resin may be produced by a method in which a polyvinyl alcohol having the above-described average degree of polymerization is provided and then acetalized.

The polyvinyl alcohol preferably has a degree of saponification of 80.0 to 99.9 mol%. When the degree of saponification is within the range, a desired strength can be obtained. The lower limit of the degree of saponification is more preferably 85.0 mol%, still more preferably 88.0 mol%, and the upper limit thereof is more preferably 99.8 mol%, still more preferably 98.0 mol%.

The polyvinyl alcohol is obtained, for example, by saponifying a copolymer of a vinyl ester and an alkylene. Examples of the vinyl ester include vinyl formate, vinyl acetate, vinyl propionate, and vinyl pivalate. From the standpoint of the economic efficiency, preferred is vinyl acetate.

The polyvinyl alcohol may be one copolymerized with an alkylenically unsaturated monomer as long as the effects of the present invention are not impaired. Examples of the alkylenically unsaturated monomer include unsaturated carboxylic acids, acrylonitrile, methacrylonitrile, acrylamide, methacrylamide, trimethyl-(3-acrylamide-3-dimethylpropyl)-ammonium chloride, and acrylamide-2-methylpropanesulfonic acid and their sodium salts. Examples of the unsaturated carboxylic acids include acrylic acid, methacrylic acid, (anhydrous) phthalic acid, (anhydrous) maleic acid, and (anhydrous) itaconic acid.

Examples of the alkylenically unsaturated monomer include ethyl vinyl ether, butyl vinyl ether, N-vinylpyrrolidone, vinyl chloride, vinyl bromide, vinyl fluoride, vinylidene chloride, vinylidene fluoride, tetrafluoroalkylene, sodium vinyl sulfonate, and sodium allyl sulfonate.

Also usable is a terminal-modified polyvinyl alcohol obtained by copolymerizing a vinyl ester monomer such as vinyl acetate with an alkylene in the presence of a thiol compound such as thiolacetic acid or mercaptopropionic acid and saponifying the resulting copolymer.

The polyvinyl alcohol may be one obtained by saponifying a copolymer of the vinyl ester and an $\alpha$-olefin. It may further be copolymerized with the ethylenically unsaturated monomer to provide a polyvinyl alcohol containing a component derived from an alkylenically unsaturated monomer. Also usable is a terminal-modified polyvinyl alcohol obtained by copolymerizing a vinyl ester monomer such as vinyl acetate with an $\alpha$-olefin in the presence of a thiol compound such as thiolacetic acid or mercaptopropionic acid and saponifying the resulting copolymer. Any $\alpha$-olefin may be used. Examples thereof include methylene, an alkylene, propylene, isopropylene, butylene, isobutylene, pentylene, hexylene, cyclohexylene, cyclohexylalkylene, and cyclohexylpropylene.

The all-solid-state battery composition of the present invention may further contain a polyvinylidene fluoride resin in addition to the polyvinyl acetal resin.

The use of the polyvinylidene fluoride resin in combination can further improve the resistance to electrolytes to improve the discharge capacity.

When the polyvinylidene fluoride resin is contained, the weight ratio between the polyvinyl acetal resin and the polyvinylidene fluoride resin is preferably 0.1:9.9 to 9.9:0.1.

When the weight ratio is within such a range, the resistance to electrolytes can be imparted while the composition is allowed to have adhesion to current collectors though the polyvinylidene fluoride is severely lacking in the adhesion to current collectors.

The weight ratio between the polyvinyl acetal resin and the polyvinylidene fluoride resin is more preferably 1:9 to 9:1.

The lower limit of the amount of the polyvinylidene fluoride resin in the all-solid-state battery composition of the present invention is preferably 0.01 parts by weight, and the upper limit thereof is preferably 20.0 parts by weight, relative to 100 parts by weight of the active material and/or the solid electrolyte. When the amount of the polyvinylidene fluoride resin is 0.01 parts by weight or greater, the resistance to electrolytes can be imparted. When the amount is 20.0 parts by weight or less, the discharge capacity of the all-solid-state battery can be improved.

The polyvinylidene fluoride resin (PVDF) preferably has a molecular weight of 200,000 or greater and 2,000,000 or less. This can improve the discharge capacity.

The lower limit of the amount of the polyvinyl acetal resin in the all-solid-state battery composition of the present invention is preferably 0.01 parts by weight, and the upper limit thereof is preferably 20 parts by weight, relative to 100 parts by weight of the active material/the solid electrolyte. When the amount of the polyvinyl acetal resin is 0.01 parts by weight or greater, the adhesion to current collectors can be improved. When the amount of the polyvinyl acetal resin is 20 parts by weight or less, the discharge capacity of the all-solid-state battery can be improved.

The lower limit of the amount of the polyvinyl acetal resin in the all-solid-state battery composition relative to 100 parts by weight of the conductive aid is preferably 0.01 parts by weight, and the upper limit thereof is preferably 200 parts by weight.

The entire amount of the binder in the all-solid-state battery composition of the present invention is not limited. The lower limit thereof is preferably 1% by weight, and the upper limit thereof is preferably 30% by weight. When the amount of the binder is 1% by weight or greater, the adhesion to current collectors can be improved. When the amount of the binder is 30% by weight or less, the discharge capacity of the all-solid-state battery can be improved.
The all-solid-state battery composition of the present invention contains an organic solvent.
Any organic solvent may be used as long as the polyvinyl acetal resin can be dissolved therein. Examples thereof include cyclohexanone, methyl ethyl ketone, methyl isobutyl ketone, tetrahydrofuran, toluene, isopropyl alcohol, N-methylpyrrolidone, ethanol, and distilled water. Preferred among these is pyrrolidone solvents such as N-methylpyrrolidone.
Each of these organic solvents may be used alone, or two or more of them may be used in combination.
The amount of the organic solvent in the all-solid-state battery composition of the present invention is not limited. The lower limit thereof is preferably 20% by weight, and the upper limit thereof is preferably 50% by weight. When the amount of the organic solvent is 20% by weight or greater, the viscosity of the paste is lowered, facilitating application of the paste. When the amount of the organic solvent is 50% by weight or less, development of unevenness after drying the solvent can be prevented. The lower limit is more preferably 25% by weight, and the upper limit is more preferably 40% by weight.
The all-solid-state battery composition of the present invention may optionally contain additives such as a flame retardant auxiliary, a thickener, a defoamer, a leveling agent, and a tackifier, in addition to the active material and/or solid electrolyte, polyvinyl acetal resin, and organic solvent described above.
The all-solid-state battery composition of the present invention may be produced by any method. An exemplary method includes mixing the active material and/or the solid electrolyte, the polyvinyl acetal resin, the organic solvent, and optionally added additives using any mixer such as a planetary mixer, a disperser, a ball mill, a blender mill, or a triple roll mill.
The all-solid-state battery composition of the present invention may be applied to a conductive substrate and dried to form an electrode or an electrolyte layer, for example. The all-solid-state battery composition of the present invention can be used for producing an electrode, an electrolyte layer, and the like, but is preferably used for producing an electrode.
An all-solid-state battery that is made with the all-solid-state battery composition of the present invention is encompassed by the present invention.
The all-solid-state battery composition of the present invention may be applied to a conductive substrate using an extrusion coater, a reverse roller, a doctor blade, an applicator, or any other application method, for example.

- Advantageous Effects of Invention

The present invention can provide an all-solid-state battery composition that is excellent in dispersibility of an active material or an electrolyte and adhesion, can provide a high-strength coating film or molded body, and enables the production of a high-capacity all-solid-state battery with low electrode resistance, and also can provide an all-solid-state battery including the all-solid-state battery composition.
Moreover, the present invention can provide an all-solid-state battery composition that enables the production of an all-solid-state battery having excellent stability over time, low hygroscopicity, and high moisture resistance, and also can provide an all-solid-state battery that is made with the all-solid-state battery composition.

DESCRIPTION OF EMBODIMENTS

The present invention is more specifically described in the following with reference to, but not limited to, examples.

(Example 1)

(Synthesis of polyvinyl acetal resin)

An amount of 150 parts by weight of a polyvinyl alcohol (degree of saponification 98.5 mol%, average degree of polymerization 8,800) was added to 3,000 parts by weight of pure water and stirred at a temperature of 90°C for about two hours for dissolution.
This solution was cooled to 40°C. To the solution were added 230 parts by weight of hydrochloric acid having a concentration of 35% by weight and 110.0 parts by weight of n-butyraldehyde. This temperature was maintained to perform acetalization reaction, whereby a reaction product was precipitated. Subsequently, the reaction was terminated at a solution temperature of 40°C, followed by neutralization, water washing, and drying by conventional methods,

whereby white powder of a polyvinyl acetal resin was obtained.

The obtained polyvinyl acetal resin was dissolved in DMSO-$d_6$ (dimethyl sulfoxide) and analyzed by $^{13}$C-NMR (nuclear magnetic resonance spectroscopy) to measure the hydroxy group content, the degree of acetalization, and the acetyl group content. The results showed that the hydroxy group content was 20.5 mol%, the degree of acetalization (degree of butyralization) was 78.0 mol%, and the acetyl group content was 1.5 mol%.

Calculation from the number average molecular weight and the composition of the polyvinyl acetal resin showed that the number of hydroxy groups per molecule was 2,421. The number average molecular weight was measured by GPC.

(Preparation of all-solid-state battery composition)

To 40.0 parts by weight of a resin solution containing the obtained polyvinyl acetal resin (polyvinyl acetal resin: 10.0 parts by weight, N-methylpyrrolidone: 30.0 parts by weight) were added 100 parts by weight of lithium cobalt oxide (produced by Nippon Chemical Industrial Co., Ltd., CELLSEED C-5H) as an active material, 5 parts by weight of acetylene black (produced by Denka Company Limited., DENKA BLACK) as a conductivity-imparting agent, and 25 parts by weight of N-methylpyrrolidone. They were then mixed with Thinky Mixer produced by Thinky Corporation, whereby an all-solid-state battery composition was obtained.

(Example 2)

A polyvinyl acetal resin and an all-solid-state battery composition were obtained as in Example 1 except that a polyvinyl alcohol (degree of saponification 98.5 mol%, average degree of polymerization 6,000) was used.

(Example 3)

A polyvinyl acetal resin and an all-solid-state battery composition were obtained as in Example 1 except that the amount of n-butyraldehyde added was 100 parts by weight.

(Example 4)

A polyvinyl acetal resin and an all-solid-state battery composition were obtained as in Example 1 except that a polyvinyl alcohol (degree of saponification 79.0 mol%, average degree of polymerization 8,800) was used and the amount of n-butyraldehyde added was 95 parts by weight.

(Example 5)

A polyvinyl acetal resin and an all-solid-state battery composition were obtained as in Example 1 except that a polyvinyl alcohol (degree of saponification 98.5 mol%, average degree of polymerization 9,500) was used.

(Example 6)

A polyvinyl acetal resin and an all-solid-state battery composition were obtained as in Example 1 except that a polyvinyl alcohol (degree of saponification 98.5 mol%, average degree of polymerization 5,500) was used.

(Examples 7 and 8)

An all-solid-state battery composition was obtained as in Example 1 except that the polyvinyl acetal resin obtained in Example 1 was used and the active material and the polyvinyl acetal resin were mixed at the composition shown in Table 1.

(Examples 9 to 11)

An all-solid-state battery composition was obtained as in Example 1 except that the polyvinyl acetal resin obtained in Example 1 was used and the active material, the polyvinyl acetal resin, and PVDF (polyvinylidene fluoride resin, produced by Arkema Inc.) were mixed at the composition shown in Table 1.

(Comparative Example 1)

A polyvinyl acetal resin and an all-solid-state battery composition were obtained as in Example 1 except that

a polyvinyl alcohol (degree of saponification 98.5 mol%, average degree of polymerization 4,500) was used.

(Comparative Example 2)

A polyvinyl acetal resin and an all-solid-state battery composition were obtained as in Example 1 except that a polyvinyl alcohol (degree of saponification 98.5 mol%, average degree of polymerization 11,000) was used.

(Comparative Example 3)

A polyvinyl acetal resin and an all-solid-state battery composition were obtained as in Comparative Example 1 except that the amount of n-butyraldehyde added was 100 parts by weight.

(Comparative Example 4)

A polyvinyl acetal resin and an all-solid-state battery composition were obtained as in Comparative Example 2 except that the amount of n-butyraldehyde added was 100 parts by weight.

(Comparative Example 5)

A polyvinyl acetal resin and an all-solid-state battery composition were obtained as in Example 1 except that a polyvinyl alcohol (degree of saponification 79.0 mol%, average degree of polymerization 4,500) was used and the amount of n-butyraldehyde added was 95 parts by weight.

(Comparative Example 6)

A polyvinyl acetal resin and an all-solid-state battery composition were obtained as in Example 1 except that a polyvinyl alcohol (degree of saponification 79.0 mol%, average degree of polymerization 11,000) was used and the amount of n-butyraldehyde added was 95 parts by weight.

(Comparative Examples 7 to 9)

An all-solid-state battery composition was obtained as in Example 1 except that the polyvinyl acetal resin obtained in Comparative Example 1 was used and the active material, the polyvinyl acetal resin, and PVDF (polyvinylidene fluoride resin, produced by Arkema Inc.) were mixed at the composition shown in Table 1.

<Evaluation>

The all-solid-state battery compositions obtained in the examples and the comparative examples were evaluated as follows. Table 1 shows the results.

(1) Dispersibility (surface roughness)

The composition for an electrode was applied to aluminum foil (thickness 20 um) to a dried thickness of 20 um and dried, whereby a specimen including a sheet-shaped electrode on the aluminum foil was obtained.

The surface roughness Ra of the obtained specimen was measured based on JIS B 0601 (1994), and the electrode surface roughness was evaluated based on the following criteria. A high dispersibility of active material is generally considered to result in a low surface roughness.

A: Ra of less than 5 um
B: Ra of 5 um or greater and 9 um or less
C: Ra of greater than 9 um

(2) Adhesion (peeling force)

The all-solid-state battery compositions obtained in the examples and the comparative examples were evaluated for adhesion to aluminum foil.

The specimen obtained in "(1) Dispersibility (surface roughness)" was cut to a size of 1 cm in length and 2 cm in width. Using AUTOGRAPH (produced by Shimadzu Corporation, "AGS-J"), the electrode sheet was pulled up with

the specimen being fixed. The peeling force (N) needed for completely peeling the electrode sheet from the aluminum foil was measured, and then evaluated based on the following criteria.

A: Peeling force of greater than 8.0 N
B: Peeling force of 5.0 to 8.0 N
C: Peeling force of less than 5.0 N

(3) Strength measurement

The obtained electrode sheet was subjected to measurement of the stress at break (MPa) in conformity with JIS K 7113 using a tensile tester (produced by Shimadzu Corporation, AUTGRAPH AGS-J) at a tensile speed of 20 mm/min.

A: Stress at break of greater than 5.0 N
B: Stress at break of 2.0 to 5.0 N
C: Stress at break of less than 2.0 N

(4) Electrode resistance measurement

The electrode resistance of the electrode sheet obtained in "(1) Dispersibility (surface roughness)" was measured using an electrode resistance meter (produced by Hioki E.E. Corp.) and evaluated based on the following criteria.

A: Electrode resistance of less than 120 Ω/sq
B: Electrode resistance of 120 to 150 Ω/sq
C: Electrode resistance of greater than 150 Ω/sq

(5) Moisture resistance

The obtained all-solid-state battery composition was left to stand under an open condition in an environment at 25°C and a humidity of 50%. The state of the composition was checked after one week and evaluated based on the following criteria.

A: No gel or agglomerate was observed.
B: A slight amount of gel or agglomerate was observed.
C: Gel or agglomerate were observed. The composition did not flow.

(6) Viscosity stability over time

The viscosity of the obtained all-solid-state battery composition at 25°C was measured using a Type B viscometer (produced by Ametek Brookfield) (viscosity immediately after production). The viscosity after leaving the composition to stand for one week was also measured in the same manner (viscosity after one week).

From the measured viscosity immediately after production and the measured viscosity after one week, the rate of viscosity change over time ([viscosity after one week/viscosity on the day of production] × 100) was calculated. The calculated rate of viscosity change over time was evaluated based on the following criteria. A high viscosity stability generally results in a low rate of viscosity change over time.

A: Rate of viscosity change over time of less than 1,000%
B: Rate of viscosity change over time of 1,000% or greater

(7) Hygroscopicity

The specimen obtained in "(1) Dispersibility (surface roughness)" was left to stand in a thermo-hygrostat at a temperature of 25°C and a relative humidity of 80% for 24 hours. From the weight change before and after standing, the moisture absorption rate ([weight after standing - weight before standing]/[weight before standing] × 100) was calculated and evaluated based on the following criteria.

(8) Cracking resistance evaluation

Ten specimens obtained in "(1) Dispersibility (surface roughness)" were each cut to a size of 5 cm in length and 5 cm in width and bent at an angle of 45°. The number of uncracked specimens was counted, and the percentage of uncracked specimens was calculated by the following equation. The obtained percentage of uncracked specimens was evaluated based on the following criteria.

$$\text{Percentage of uncracked specimens} = (\text{number of uncracked specimens}/10) \times 100$$

o (Good): Percentage of uncracked specimens of 90% or greater
Δ (Fair): Percentage of uncracked specimens of higher than 80% and less than 90%
× (Poor): Percentage of uncracked specimens of 80% or less

[Table 1]

| | Polyvinyl acetal resin | | | | | All-solid-state battery composition (parts by weight) | | | Evaluation of all-solid-state battery composition | | | | | | | | | |
|---|---|---|---|---|---|---|---|---|---|---|---|---|---|---|---|---|---|---|
| | | | | | | | | | Dispersibility | Adhesion | Sheet strength | Electrode resistance | | | Stability over time | | Hygroscopicity | Cracking resistance |
| | Average degree of polymerization | Degree of acetalization (mol%) | Acetyl group content (mol%) | Hydroxy group content (mol%) | Number of hydroxy groups per molecule | Active material | Polyvinyl acetal resin | PVDF | Surface roughness | Peel strength | Stress at break | Resistance value (Ω/sq) | Evaluation | Moisture resistance | Rate of viscosity change (%) | Evaluation | Moisture absorption rate (%) | (%) |
| Example 1 | 8800 | 78.0 | 1.5 | 20.5 | 2421 | 100 | 100 | - | A | A | A | 90 | A | A | 912 | A | 1.8 | ○ |
| Example 2 | 6000 | 78.0 | 1.5 | 20.5 | 1640 | 100 | 100 | - | A | A | A | 100 | A | A | 694 | A | 2.0 | ○ |
| Example 3 | 8800 | 72.5 | 1.5 | 26.0 | 3000 | 100 | 100 | - | B | A | A | 115 | A | B | 895 | A | 2.5 | △ |
| Example 4 | 8800 | 58.5 | 21.0 | 20.5 | 2422 | 100 | 100 | - | A | A | A | 122 | B | B | 812 | A | 2.0 | ○ |
| Example 5 | 9500 | 78.0 | 1.5 | 20.5 | 2501 | 100 | 100 | - | B | A | A | 88 | A | A | 957 | A | 1.7 | ○ |
| Example 6 | 5500 | 78.0 | 1.5 | 20.5 | 1488 | 100 | 100 | - | A | B | B | 110 | A | A | 655 | A | 2.0 | △ |
| Example 7 | 8800 | 78.0 | 1.5 | 20.5 | 2401 | 100 | 0.05 | - | A | A | A | 75 | A | A | 635 | A | 1.6 | ○ |
| Example 8 | 8800 | 78.0 | 1.5 | 20.5 | 2399 | 100 | 18.0 | - | A | A | A | 124 | B | A | 922 | A | 2.7 | ○ |
| Example 9 | 8800 | 78.0 | 1.5 | 20.5 | 2356 | 100 | 5.0 | 5.0 | A | A | A | 85 | A | A | 950 | A | 1.5 | ○ |
| Example 10 | 8800 | 78.0 | 1.5 | 20.5 | 2399 | 100 | 1.0 | 9.0 | A | A | A | 80 | A | A | 980 | A | 1.3 | ○ |

(continued)

| | Polyvinyl acetal resin | | | | | All-solid-state battery composition (parts by weight) | | | Evaluation of all-solid-state battery composition | | | | | | | | | |
|---|---|---|---|---|---|---|---|---|---|---|---|---|---|---|---|---|---|---|
| | | | | | | | | | Dispersibility | Adhesion | Sheet strength | Electrode resistance | | | Stability over time | | Hygroscopicity | Cracking resistance |
| | Average degree of polymerization | Degree of acetalization (mol%) | Acetyl group content (mol%) | Hydroxy group content (mol%) | Number of hydroxy groups per molecule | Active material | Polyvinyl acetal resin | PVDF | Surface roughness | Peel strength | Stress at break | Resistance value (Ω/sq) | Evaluation | Moisture resistance | Rate of viscosity change (%) | Evaluation | Moisture absorption rate (%) | (%) |
| Example 11 | 8800 | 78.0 | 1.5 | 20.5 | 2420 | 100 | 9.0 | 1.0 | A | A | A | 88 | A | A | 933 | A | 1.7 | ○ |
| Comparative Example 1 | 4500 | 78.0 | 1.5 | 20.5 | 1277 | 100 | 100 | - | A | A | C | 167 | C | A | 1002 | B | 1.8 | × |
| Comparative Example 2 | 11000 | 78.0 | 1.5 | 20.5 | 2913 | 100 | 100 | - | C | A | B | 138 | B | A | 1092 | B | 1.7 | ○ |
| Comparative Example 3 | 4500 | 725 | 1.5 | 26.0 | 1777 | 100 | 100 | - | B | A | C | 157 | C | C | 980 | A | 2.8 | × |
| Comparative Example 4 | 11000 | 725 | 1.5 | 26.0 | 3788 | 100 | 100 | - | C | A | B | 148 | B | C | 1100 | B | 2.6 | △ |
| Comparative Example 5 | 4500 | 58.5 | 21 | 20.5 | 1367 | 100 | 100 | - | A | A | C | 147 | B | B | 900 | A | 1.9 | × |
| Comparative Example 6 | 11000 | 58.5 | 21 | 20.5 | 3001 | 100 | 100 | - | C | A | B | 130 | B | B | 1099 | B | 2.0 | △ |

(continued)

| | Polyvinyl acetal resin | | | | | All-solid-state battery composition (parts by weight) | | | Evaluation of all-solid-state battery composition | | | | | | | | | |
|---|---|---|---|---|---|---|---|---|---|---|---|---|---|---|---|---|---|---|
| | | | | | | | | | Dispersibility | Adhesion | Sheet strength | Electrode resistance | | | Stability over time | | Hygroscopicity | Cracking resistance |
| | Average degree of polymerization | Degree of acetalization (mol%) | Acetyl group content (mol%) | Hydroxy group content (mol%) | Number of hydroxy groups per molecule | Active material | Polyvinyl acetal resin | PVDF | Surface roughness | Peel strength | Stress at break | Resistance value (Ω/sq) | Evaluation | Moisture resistance | Rate of viscosity change (%) | Evaluation | Moisture absorption rate (%) | (%) |
| Comparative Example 7 | 4500 | 78.0 | 1.5 | 20.5 | 1280 | 100 | 5.0 | 5.0 | A | A | C | 115 | A | A | 1055 | B | 1.9 | × |
| Comparative Example 8 | 4500 | 78.0 | 1.5 | 20.5 | 1277 | 100 | 1.0 | 9.0 | A | A | C | 122 | B | A | 1112 | B | 1.7 | × |
| Comparative Example 9 | 4500 | 78.0 | 1.5 | 20.5 | 1256 | 100 | 9.0 | 1.0 | A | A | C | 105 | A | A | 992 | A | 21 | × |

INDUSTRIAL APPLICABILITY

The present invention can provide an all-solid-state battery composition that is excellent in dispersibility of an active material or an electrolyte and adhesion, that can provide a high-strength coating film or molded body, and that enables the production of a high-capacity all-solid-state battery with low electrode resistance, and can also provide an all-solid-state battery that is made with the all-solid-state battery composition.

## Claims

1. An all-solid-state battery composition to be used for an all-solid-state battery, the composition comprising:

   an active material and/or a solid electrolyte;
   a polyvinyl acetal resin; and
   an organic solvent,
   the polyvinyl acetal resin having an average degree of polymerization of 5,000 or greater and 10,000 or less.

2. The all-solid-state battery composition according to claim 1,
   wherein the polyvinyl acetal resin has an average degree of polymerization of 5,600 or greater.

3. The all-solid-state battery composition according to claim 1 or 2,
   wherein the polyvinyl acetal resin has a degree of acetalization of 55.0 mol% or greater and 84.0 mol% or less.

4. The all-solid-state battery composition according to claim 1, 2, or 3,
   wherein the polyvinyl acetal resin has a hydroxy group content of 15.0 mol% or greater and 25.0 mol% or less.

5. The all-solid-state battery composition according to claim 1, 2, 3, or 4,
   wherein the polyvinyl acetal resin is an unmodified polyvinyl acetal resin.

6. The all-solid-state battery composition according to claim 1, 2, 3, 4, or 5,
   wherein the all-solid-state battery composition contains 0.01 parts by weight or greater and 20.0 parts by weight or less of the polyvinyl acetal resin relative to 100 parts by weight of the active material and/or the solid electrolyte.

7. An all-solid-state battery that is made with the all-solid-state battery composition according to claim 1, 2, 3, 4, 5, or 6.

**INTERNATIONAL SEARCH REPORT**

International application No.
**PCT/JP2022/014628**

**A. CLASSIFICATION OF SUBJECT MATTER**

***H01M 4/13***(2010.01)i; ***H01M 4/62***(2006.01)i
FI: H01M4/13; H01M4/62 Z

According to International Patent Classification (IPC) or to both national classification and IPC

**B. FIELDS SEARCHED**

Minimum documentation searched (classification system followed by classification symbols)

H01M4/13; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/066917 A1 (SEKISUI CHEM. CO., LTD.) 02 April 2020 (2020-04-02) claims 1, 4, paragraphs [0044], [0048], examples 19-24, comparative examples 3-4 | 1-2, 5-7 |
| X | JP 2020-057602 A (SEKISUI CHEM. CO., LTD.) 09 April 2020 (2020-04-09) claims 1-2, 4, examples 33-40, comparative examples 3, 4 | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 May 2022** | **07 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/014628**

| Patent document cited in search report | Publication date (day/month/year) | Patent family member(s) | Publication date (day/month/year) |
|---|---|---|---|
| WO 2020/066917 A1 | 02 April 2020 | (Family: none) | |
| JP 2020-057602 A | 09 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5708872 B
- JP 2013179040 A
- JP 2012238545 A